# EUROPEAN PATENT SPECIFICATION

(11) **EP 1 763 311 B1**
(45) Date of publication and mention of the grant of the patent: **27.01.2010**
(21) Application number: 04770060.4
(22) Date of filing: 22.09.2004
(51) Int. Cl.: A47J 31/18

(54) **A COFFEE MACHINE AND A COFFEE PREPARATION METHOD**
KAFFEEMASCHINE UND KAFFEEZUBEREITUNGSVERFAHREN
MACHINE A CAFE ET PROCEDE DE PREPARATION DE CAFE

(30) Priority: 17.06.2004 TR 200401458
(43) Date of publication of application: 21.03.2007
(73) Proprietor: Arçelik Anonim Sirketi, 34950 Istanbul (TR)
(72) Inventor: HAZIR, Sefa, Arcelik Anonim Sirketi, 34950 Istanbul (TR); HASANREISOGLU, Levent, Arcelik Anonim Sirketi, 34950 Istanbul (TR); KAYALAR, Gokce, Arcelik Anonim Sirketi, 34950 Istanbul (TR); SIMSIR, Bogac, Arcelik Anonim Sirketi, 34950 Istanbul (TR); ALBAS, Evren, Arcelik Anonim Sirketi, 34950 Istanbul (TR)
(86) International application number: PCT/IB2004/051826
(87) International publication number: WO 2006/008583

(56) References cited:
- EP-A- 1 106 127
- WO-A-2004/069013
- GR-A- 2001 100 013

## Description

This invention is related to a coffee machine and a coffee preparation method.

In order to prepare Turkish coffee in accordance with the accustomed flavor, the mixture, obtained from the addition of finely ground coffee, sugar and cold water in defined quantities as desired to a pot having wide a heating surface as possible like cezve (a small, long handled pot for making Turkish coffee), should be stirred thoroughly in advance, slowly heated and when froth starts to form, served in cups just before it reaches boiling point. In order to obtain the traditional flavor and appearance of Turkish coffee by using an automatic coffee making machine, the methods used should have similarities with the traditional coffee preparation methods. There are several Turkish coffee machines manufactured by utilizing traditional coffee making methods; however, they do not provide the flavor and the consistency that the consumers of Turkish coffee require.

The pot, wherein the Turkish coffee is prepared, is heated from the bottom by mean s of a heater and when the desired froth level is reached and the boiling process is over, the heat transmitted from the heater to the coffee boiling pot is required to be turned off immediately. Even tough the energy transmitted to the heater is turned off immediately in order to stop heat transmission, the heat transmission to the boiling pot continues due to the thermal inertia of the heating apparatus, thus the coffee reaches boiling point by being over heated than the required level and the desired Turkish coffee flavor cannot be obtained.

In the TR200300199 numbered Turkish patent application, a heating system of an automatic coffee machine which makes Turkish coffee in accordance with the accustomed taste and consistency is disclosed. Preparation of the Turkish coffee is conducted by a heater which escalates by means of a mechanism that moves up and down to contact the bottom surface of the boiling pot. At the end of the boiling process, the boiling process is ended by sensors which detect that the Turkish coffee is made at a desired consistency and the contact of the heater with the boiling pot is cut off by moving downwards by means of the lifting mechanism.

A Further coffee machine is described in GR 2001 100013 A.

The objective of the invention is to realize a coffee machine, wherein the preparation time is accurately determined in order to make a Turkish coffee at a desired consistency, and a coffee preparation method.

The coffee machine and the coffee preparation method realized in order to attain the objects of this invention has been illustrated in the attached drawings, wherein;

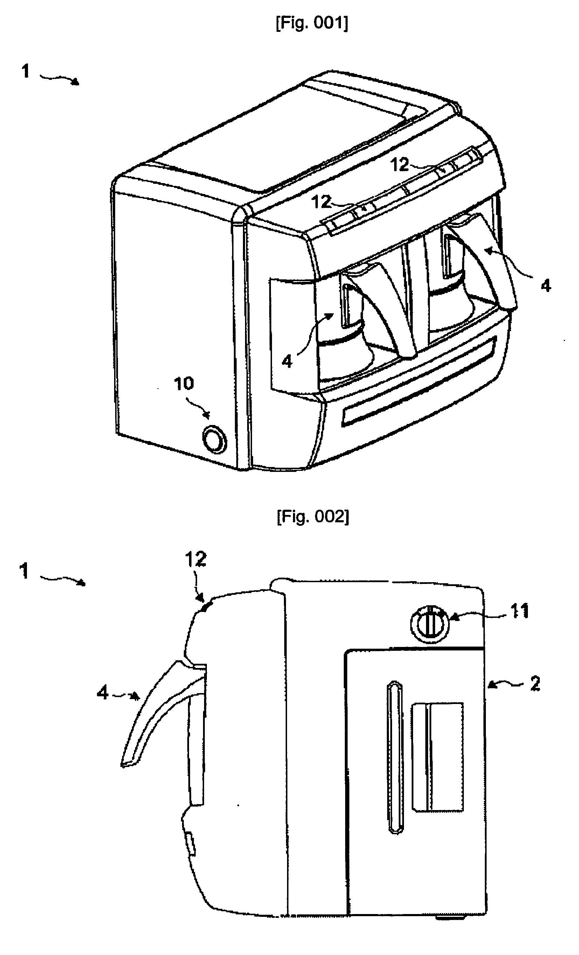

Figure 1 - is a perspective view of a coffee machine.

Figure 2 - is a side view of a coffee machine.

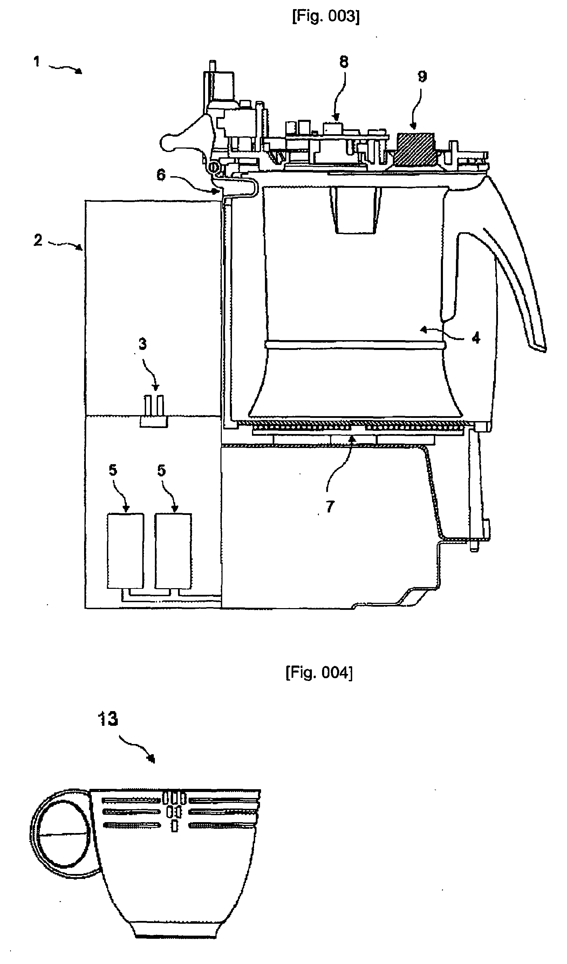

Figure 3 - is a schematic view of a coffee machine.

Figure 4 - is a front view of a measuring cup.

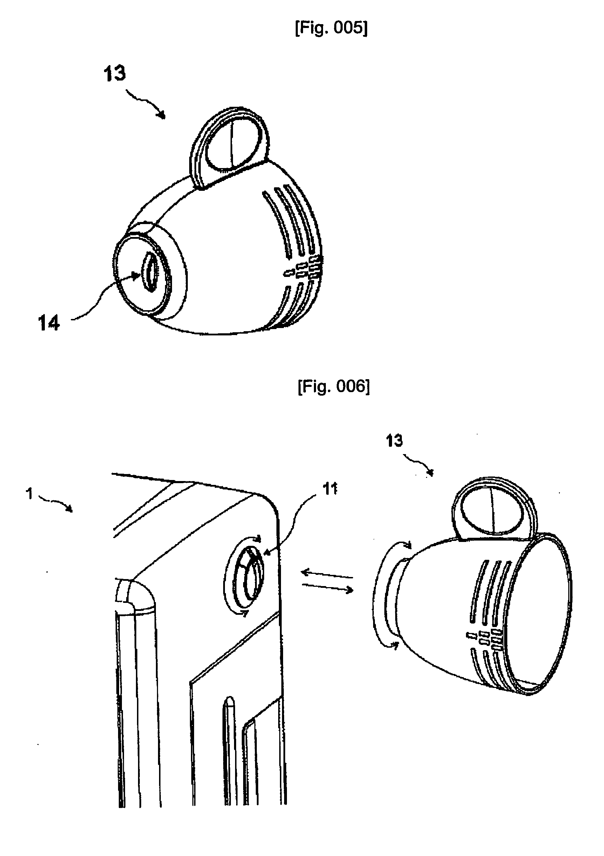

Figure 5 - is bottom perspective view of a measuring cup.

Figure 6 - is schematic view of the process of adjusting the coffee cup size selection button located on the coffee machine with the measuring cup.

The components in the figures have each been numbered corresponding the following:
1. Coffee machine
2. Water tank
3. Water level sensor
4. Boiling pot
5. Pump
6. Proximity sensor
7. Heater
8. Infrared sensor
9. Vapor thermostat
10. Start-up button
11. Coffee cup size selection button
12. Coffee cup quantity selection button
13. Measuring cup
14. Projection

The coffee machine (1) comprises a water tank (2), a water level sensor (3) which detects water level, one or more boiling pots (4) which can be attached and removed and wherein the boiling process is performed, one or more pumps (5) which convey the water in the water tank (2) to the boiling pot (4), one or more proximity sensors (6) which detect the placement of boiling pots (4), one or more heaters (7) of an induction and/or a resistance type which ensure the boiling pot (4) to be heated during the defined boiling period, which cut off the energy transmitted to the boiling pot (4) immediately at the end of the boiling period, one or more infrared sensors (8) which determine boiling by detecting the difference in the froth height caused by the items boiled in the boiling pot (4), one or more vapor thermostats (9) which end the boiling process for security purposes in case of necessity, one or more start-up buttons (10) which initiate coffee boiling process, one or more coffee cup size selection buttons (11) which are adjusted according to the size of the cups wherein Turkish coffee is to be served in order to determine the quantity of water to be pumped to the boiling pots (4) and one or more coffee cup quantity selection buttons (12) which are adjusted according to the quantity of the cups wherein Turkish coffee is to be served in order to determine the quantity of water to be pumped to the boiling pots (4).

The infrared sensor (8) determines to initiate the boiling process by detecting the initial level of the coffee, water and sugar mixture added to the boiling pot (4) in defined quantities and determines to conclude the boiling process by detecting the difference in froth height and when the boiling process is concluded, the energy transmitted from the heater (7) to the boiling pot (4) is cut off immediately.

The infrared sensor (8) is set to detect the initial level of the mixture, which is composed in order to make Turkish coffee in a boiling pot (4) in amounts according to the cup size and cup quantity wherein Turkish coffee is to be served, and the froth height limit that every mixture at an initial level will reach after the boiling process. Coffee and sugar is added to the boiling pot (4) before the boiling process is actuated and after the actuation of the boiling process, water is conveyed in amounts determined by the coffee cup size selection button (11) and coffee cup quantity selection button (12). The boiling process is actuated if the initial level of the coffee, sugar and water mixture is within the limits of the initial level before being heated where the infrared sensor (8) is set. The mixture composed starts to froth and its level begins to rise as it is heated. As the initial and the final level for each amount would be different when Turkish coffee is prepared in different amounts, the infrared sensor (8) detects the initial level and the froth height limit of the mixtures which are composed according to the minimum and maximum cup size and quantity and to the values in between.

In the preferred embodiment of the invention, induction type heaters (7) are utilized in the coffee machine (1) which cut off the heat transmitted to the boiling pot (4) immediately after the required boiling process for preparing good quality Turkish coffee is over. As the thermal inertia of the induction type heaters (7) is low enough to be, neglected, the heating process of the boiling pot (4) ends when the energy transmitted to the induction type heater (7) is cut off at the end of the boiling process. Thus, the overflow of the coffee and the disappearance of the froth, which is an essential quality of a Turkish coffee, is prevented. When heating the same amount of mixture, induction type heaters (7) due to their high efficiency consume less amount of energy than the resistance type heaters (7).

In another embodiment of the invention, resistance type heaters (7) are used and these heaters (7) conduct heating processes by contacting the boiling pot (4) during the beginning of the boiling process by moving upwards by means of a lifting mechanism and when the boiling process is over, at the moment when the infrared sensor (8) detects froth rise and sends a signal, their contact with the boiling pot (4) is cut off by moving downwards.

Coffee cup quantity selection button (12) can also be used as a start up button (10) to actuate the boiling process.

Coffee cup size selection button (11) adjusts the operation time of the pumps by means of a potentiometer in order to obtain the appropriate water quantity required by different sized cups. The coffee machine (1) comprises a measuring cup (13) having plurality of stages which are adjusted according to the volume of different sized cups, which enables the user to adjust the coffee cup size selection button (11) according to the size of the coffee cups to be used.

After being adjusted once, the coffee cup size selection button (11) will be used rarely as the household coffee cups are not changed frequently and it is adjusted by means of an auxiliary apparatus as it cannot be turned on its own accord or accidentally. Measuring cup (13) comprises a projection (14) preferably located on its base which enables adjusting the coffee cup size selection button (11). Coins or forks, spoons or knives used in the kitchen could be used as an auxiliary apparatus to adjust the coffee cup selection button (11).

Turkish coffee is prepared in the coffee machine by using a method composed of the following steps:
- Items such as coffee and sugar are added to the boiling pot (4) in defined amounts according to the size and/or quantities of the coffee cups wherein Turkish coffee is to be served.
- The boiling pot (4) is placed inside the coffee machine (1).
- The coffee cup size selection button (11) is adjusted according to the size of the coffee cup wherein Turkish coffee is to be served in order to determine the quantity of water to be pumped to the boiling pot (4), for example, it is turned to 1 for a big sized cup, to 2 for a middle sized cup and to 3 for small sized cup,
- The coffee cup quantity selection button (12) is adjusted according to the quantity of the coffee cups wherein Turkish coffee is to be served in order to determine the quantity of water to be pumped to the boiling pot (4).
- The coffee machine (1) is actuated by means of the start-up button (10) and also the coffee cup quantity selection button (12) which also has a function to start the boiling process.
- The water level inside the water tank (2) is controlled with the water level sensor (3). If the quantity of water inside the water tank (2) is below a certain level, a vocal and/or visual warning is given and the boiling process cannot be actuated.
- The proximity sensor (6) controls whether or not the boiling pot (4) is fitted properly inside the coffee machine (1). If the boiling pot (4) is not fitted properly, a vocal and/or visual warning is given and the boiling process cannot be actuated.
- The network voltage is controlled. If the voltage is below a certain value, for example, 175 V, a vocal and/or visual warning is given and the boiling process cannot be actuated.
- The vapor thermostat (9) is controlled. If the vapor thermostat (9) is in an active state, a vocal and/or visual warning is given and the boiling process cannot be actuated.
- Water is conveyed by means of a pump (5) to the boiling pot (4) in amounts determined by the coffee cup size selection button (11) and the coffee cup quantity selection button (12).
- If the pump (5) does not work, a vocal and/or visual warning is given and the boiling process cannot be actuated.
- The initial level of the mixture inside the boiling pot (4) is controlled by the infrared sensor (8) and if the level of the mixture is too low or too high, a vocal and/or visual warning is given and the boiling process cannot be actuated.
- If all the results obtained from the controllers are positive, the boiling process is actuated by transmitting energy to the heater (7).
- Rising and frothing of the mixture inside the boiling pot (4) is controlled by the infrared sensor (8).
- The boiling process is concluded if rising and frothing of the mixture does not take place in the given period of time.
- If the mixture reaches boiling point without frothing the boiling process is ended by the vapor thermostat (9).
- The infrared sensor (8) detects froth height when it reaches a certain level and sends a signal to the heater (7).
- Energy transmitted from the heater (7) to the boiling pot (4) is cut off immediately and a vocal and/or visual warning is given to affirm that Turkish coffee is made.
- The boiling pot is removed from its place and the coffee inside it is served in cups.

The inventive coffee machine (1) controls incidences such as heating, frothing and over flowing which take place before and during the boiling process and makes Turkish coffee in accordance with its traditional flavor and consistency for a large amount of people in a short period of time by controlling plurality of boiling pots (4) individually or from a single center.

## Claims

1. A coffee machine (1) comprising one or more boiling pots (4) wherein the boiling process is performed, **characterized** with one or more infrared sensors (8) which are set to detect the initial level of the mixture that is added to the boiling pot (4) to make coffee in amounts according to the cup size and quantity and the froth height limit that every mixture at an initial level will reach after the boiling process and which decides to actuate and end the boiling process according to its set values and one or more heaters (7) which cut off energy transmission to the boiling pot (4) immediately after the infrared sensor (8) decides to end the boiling process.

2. A coffee machine (1) as defined in claim 1 **characterized** with an induction type heater (7).

3. A coffee machine (1) as defined in claim 1 **characterized** with one or more coffee cup size selection buttons (11) which are adjusted according to the size of the cups wherein Turkish coffee is to be served in order to determine the quantity of water to be pumped to the boiling pots (4) and one or more coffee cup quantity selection buttons (12) which are adjusted according to the quantity of the cups wherein Turkish coffee is to be served in order to determine the quantity of water to be pumped to the boiling pots (4).

4. A coffee machine (1) as defined in claim 3 **characterized** with a coffee cup size selection button (12) which actuates coffee preparation process.

5. A coffee machine (1) as defined in claim 3 **characterized** with a coffee cup quantity selection button (11) which has a form that cannot be turned by its own accord or accidentally after it has been adjusted once and which is adjusted by means of an auxiliary apparatus.

6. A coffee machine (1) as defined in claim 3 **characterized** with a measuring cup (13) which has plurality of stages which are adjusted according to the volume of different sized cups, which enables the user to adjust the coffee cup size selection button (11) according to the size of the coffee cups to be used.

7. A coffee machine (1) as defined in claims 3, 5 and 6 **characterized** with a measuring cup (13) comprising a projection (14) which enables adjusting the coffee cup size selection button (11).

8. A coffee machine (1) as defined in claim 1 **characterized** with a water tank (2), a water level sensor (3) which detects water level, one or more pumps (5) which convey the water in the water tank (2) to the boiling pot (4), one or more proximity sensors (6) which detect the placement of boiling pots (4) and one or more vapor thermostats (9) which end the boiling process for security purposes in case of necessity.

9. A Turkish coffee preparation method for a coffee machine (1) as defined in claims 3 and 8 comprising the steps: adding items such as coffee and sugar to the boiling pot (4); placing the boiling pot (4) inside the coffee machine (1);
adjusting the coffee cup size selection button (11); adjusting the coffee cup quantity selection button (12); actuating the coffee machine (1); controlling the water level inside the water tank (3) by means of a water level sensor (3); controlling whether the boiling pot (4) is fitted properly inside the coffee machine (1) by means of a proximity sensor (6); conveying water to the boiling pot (4) by means of a pump (5); controlling the initial level of the mixture inside the boiling pot (4) by means of an infrared sensor (8); actuating the boiling process by transmitting energy to the heater (7); detecting rising and frothing of the mixture inside the boiling pot (4) by means of an infrared sensor (8); ending the boiling process if rising and frothing of the mixture does not take place in the given period of time; ending the boiling process by means of a vapor thermostat (9) if the mixture reaches boiling point without frothing; sending a signal to the heater (7) from the infrared sensor (8) which detects the froth height when it reaches a certain level; ending the boiling process by cutting off the energy transmitted from the heater (7) to the boiling pot (4).

## Patentansprüche

1. Kaffeemaschine (1), umfassend einen oder mehrere Brühbehälter (4), in denen der Brühvorgang durchgeführt wird, **gekennzeichnet durch** einen oder mehrere Infrarotsensoren (8), die dazu eingestellt sind, den Anfangspegel des Gemischs zu detektieren, das in den Brühbehälter (4) gegeben wird, um Kaffee in Mengen herzustellen, die der Tassengröße und der Menge und der Schaumhöhenbegrenzung entsprechen, die die einzelnen Gemische bei einem Anfangspegel nach dem Brühvorgang erreichen, und die anhand ihrer Einstellwerte entscheiden, den Brühprozess auszulösen und zu beenden, und eine oder mehrere Heizvorrichtungen (7), die die Energieübertragung an den Brühbehälter (4) unterbrechen, sobald der Infrarotsensor (8) entscheidet, den Brühprozess zu beenden.

2. Kaffeemaschine (1) nach Anspruch 1, **dadurch gekennzeichnet, dass** die Heizvorrichtung (7) eine Heizvorrichtung des Induktionstyps ist.

3. Kaffeemaschine (1) nach Anspruch 1, **gekennzeichnet durch** einen oder mehrere Kaffeetassengrößenauswahltasten (11), die entsprechend der Größe der Tassen, in denen türkischer Kaffee serviert werden soll, eingestellt werden, um die Menge an Wasser zu bestimmen, die in die Brühbehälter (4) zu pumpen ist, und eine oder mehrere Kaffeetassenmengenauswahltasten (12), die entsprechend der Menge der Tassen eingestellt werden, in denen türkischer Kaffee serviert werden soll, um die Menge an Wasser zu bestimmen, die in die Brühbehälter (4) zu pumpen ist.

4. Kaffeemaschine (1) nach Anspruch 3, **dadurch gekennzeichnet, dass** die Kaffeetassenmengenauswahltaste (12) den Kaffeezubereitungsvorgang auslöst.

5. Kaffeemaschine (1) nach Anspruch 3, **dadurch gekennzeichnet, dass** die Kaffeetassengrößenauswahltaste (11) eine Form aufweist, durch die sie sich nicht von selbst oder versehentlich drehen kann, nachdem sie einmal eingestellt wurde, und mit Hilfe einer Hilfseinrichtung eingestellt wird.

6. Kaffeemaschine (1) nach Anspruch 3, **gekennzeichnet durch** einen Messbehälter (13), der mehrere Stufen aufweist, die entsprechend dem Volumen von Tassen unterschiedlicher Größe eingestellt werden, wodurch der Benutzer die Kaffeetassengrößenauswahltaste (11) entsprechend den zu verwendenden Kaffeetassen einstellen kann.

7. Kaffeemaschine (1) nach den Ansprüchen 3, 5 und 6, **dadurch gekennzeichnet, dass** der Messbehälter (13) einen Vorsprung (14) umfasst, der es ermöglicht, die Kaffeetassengrößenauswahltaste (11) einzustellen.

8. Kaffeemaschine (1) nach Anspruch 1, **gekennzeichnet durch** einen Wassertank (2), einen Wasserpegelsensor (3), der den Wasserpegel detektiert, eine oder mehrere Pumpen (5), die das Wasser im Wassertank zum Brühbehälter (4) leiten, einen oder mehrere Näherungssensoren (6), die die Anordnung der Brühbehälter (4) detektieren, und ein oder mehrere Dampfthermostate (9), die bei Bedarf den Brühvorgang aus Sicherheitsgründen beenden.

9. Verfahren zum Zubereiten von türkischem Kaffee für eine Kaffeemaschine (1) nach den Ansprüchen 3 und 8, folgende Schritte umfassend: Hineingeben von Elementen wie Kaffee und Zucker in den Brühbehälter (4); Einsetzen des Brühbehälters (4) in die Kaffeemaschine (1); Einstellen der Kaffeetassengrößenauswahltaste (11); Einstellen der Kaffeetassenmengenauswahltaste (12); Betätigen der Kaffeemaschine (1); Prüfen des Wasserpegels im Wassertank (3) mittels eines Wasserpegelsensors (3); Prüfen, ob der Brühbehälter (4) richtig in der Kaffeemaschine (1) sitzt, mittels eines Näherungssensors (6); Leiten von Wasser zum Brühbehälter (4) mittels einer Pumpe (5); Prüfen des Anfangspegels des Gemischs im Brühbehälter (4) mittels eines Infrarotsensors (8); Auslösen des Brühvorgangs durch Übertragen von Energie an die Heizvorrichtung (7); Detektieren des Ansteigens und der Schäumens des Gemischs im Brühbehälter (4) mittels eines Infrarotsensors (8), Beenden des Brühvorgangs, wenn das Ansteigen und Schäumen des Gemischs nicht innerhalb des vorgegebenen Zeitraums stattfindet; Beenden des Brühvorgangs mittels eines Dampfthermostats (9), wenn das Gemisch den Siedepunkt erreicht, ohne zu schäumen; Senden eines Signals an die Heizvorrichtung (7) von dem Infrarotsensor (8), der die Schaumhöhe detektiert, wenn sie einen bestimmten Pegel erreicht; Beenden des Brühvorgangs durch Unterbrechen der Energie, die von der Heizvorrichtung (7) an den Brühbehälter (4) übertragen wird.

## Revendications

1. Une machine à café (1) comprenant un ou plusieurs pots d'ébullition (4) dans lequel/lesquels le processus d'ébullition est effectué, **caractérisée par** un ou plusieurs capteurs infrarouges (8) qui sont configurés pour détecter le niveau initial du mélange rajouté au pot d'ébullition (4) pour faire du café en quantités convenables selon la taille et le nombre des tasses et la limite de la hauteur d'écume que chaque mélange à un niveau initial devrait atteindre après le processus d'ébullition et qui décide d'actionner et de mettre fin à l'ébullition en fonction de ses valeurs préfixées et, un ou plusieurs appareils de chauffage (7) qui coupe la transmission d'énergie au pot d'ébullition (4) immédiatement après que le capteur infrarouge (8) décide de mettre fin au processus d'ébullition.

2. Une machine à café (1) selon la Revendication 1, **caractérisée par** un système de chauffage par induction (7).

3. Une machine à café (1) selon la Revendication 1, **caractérisée par** un ou plusieurs boutons de sélection de taille de la tasse à café (11), qui sont ajustés en fonction de la taille des tasses dans lesquelles le café turc est servi, dans le but de déterminer la quantité d'eau à être pompée vers les pots d'ébullition (4) et un ou plusieurs boutons de sélection de quantité de la tasse de café (12), qui sont ajustées en fonction de la quantité du café turc à servir dans les tasses, en vue de déterminer la quantité d'eau à être pompée vers les pots d'ébullition (4).

4. Une machine à café (1) selon la Revendication 3, **caractérisée par** un bouton de sélection de quantité de la tasse à café (12) qui met en marche le processus de préparation du café.

5. Une machine à café (1) selon la Revendication 3, **caractérisée par** un bouton de sélection de taille de la tasse à café (11) qui a une forme qui ne peut être tournée par son propre chef ou accidentellement après qu'elle a été adaptée une fois, et qui est ajustée au moyen d'un appareil auxiliaire.

6. Une machine à café (1) selon la Revendication 3, **caractérisée par** une tasse à mesurer (13) qui a plusieurs étages qui sont ajustés en fonction du volume de tailles de différentes tasses, qui permet à l'utilisateur d'ajuster la taille de la tasse de café en utilisant le bouton de sélection (11) selon la taille des tasses à café à utiliser.

7. Une machine à café (1) selon les Revendications 3, 5 et 6, **caractérisée par** une tasse à mesurer (13) comprenant une projection (14) qui assure l'ajustement du bouton de sélection de taille de la tasse à café (11).

8. Une machine à café (1) selon la Revendication 1, **caractérisée par** un réservoir d'eau (2), un capteur de niveau d'eau (3), qui détecte le niveau d'eau, une ou plusieurs pompes (5) qui véhiculent l'eau du réservoir d'eau (2) vers le pot d'ébullition (4), un ou plusieurs capteurs de proximité (6) qui détectent le placement du pot d'ébullition (4) et un ou plusieurs thermostats de vapeur (9), qui met fin au processus de l'ébullition par sécurité en cas de nécessité.

9. Une méthode de préparation de café turc à utiliser dans la machine à café (1) selon les Revendications 3 et 8, comprenant les étapes suivantes : l'ajout d'éléments tels que le café et le sucre dans le pot d'ébullition (4) ; la mise du pot d'ébullition (4) à l'intérieur de la machine à café (1) ; l'ajustement de la tasse à café par le bouton de sélection de taille (11) ; l'ajustement de la tasse à café par le bouton de sélection de quantité (12) ; la mise en marche de la machine à café (1) ; le contrôle du niveau d'eau à l'intérieur du réservoir d'eau (3) au moyen d'un capteur de niveau d'eau (3) ; le contrôle du pot d'ébullition (4) pour vérifier s'il est correctement monté dans la machine à café (1) au moyen d'un détecteur de proximité (6) ; la transmission de l'eau au pot d'ébullition (4) au moyen d'une pompe (5) ; le contrôle du niveau initial du mélange à l'intérieur du pot d'ébullition (4) au moyen d'un capteur infrarouge (8) ; la mise en marche de l'ébullition par la transmission d'énergie pour le chauffage (7) ; la détection de la hausse de production de mousse et du mélange dans le pot d'ébullition (4) au moyen d'un capteur infrarouge (8) ; la terminaison du processus d'ébullition si l'augmentation de mousse du mélange ne se fait pas dans la période de temps déterminée ; la terminaison du processus d'ébullition au moyen d'un thermostat de vapeur (9) si le mélange atteint le point d'ébullition sans mousse ; l'envoi d'un signal à l'appareil de chauffage (7) du capteur infrarouge (8) qui détecte la hauteur de la mousse lorsqu'elle atteint un certain niveau ; la terminaison de l'ébullition par coupure de l'énergie transmise de l'appareil de chauffage (7) au pot d'ébullition (4).
